(19) Europäisches Patentamt
European Patent Office
Office européen des brevets

(11) **EP 3 104 138 A1**

(12) **EUROPÄISCHE PATENTANMELDUNG**

(43) Veröffentlichungstag:
**14.12.2016 Patentblatt 2016/50**

(21) Anmeldenummer: **15171514.1**

(22) Anmeldetag: **10.06.2015**

(51) Int Cl.:
*G01F 3/36* (2006.01)       *G01F 5/00* (2006.01)
*G01F 15/00* (2006.01)      *G01F 15/18* (2006.01)
*G01F 3/30* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA**

(71) Anmelder: **Dr.-Ing. Ritter Apparatebau GmbH &
Co.KG
44892 Bochum (DE)**

(72) Erfinder:
• **Dr. Ritter, Joachim
44797 Bochum (DE)**
• **Kim, Young Sung
21033 Hamburg (DE)**

(74) Vertreter: **Köster, Hajo et al
Meissner Bolte Patentanwälte
Rechtsanwälte Partnerschaft mbB
Widenmayerstraße 47
80538 München (DE)**

(54) **GASVOLUMENZÄHLER**

(57) Bereit gestellt wird ein Gasvolumenzähler (1) mit einem ersten (2) und einem zweiten (3) sich nach oben erstreckenden, zur Aufnahme eines Sperrfluids (5) geeigneten Arbeitsrohr, wobei beide Arbeitsrohre (2,3) in ihrem oberen, freien Bereich in eine erste (7) bzw. zweite (8) Gasleitung übergehen und in ihrem unteren Bereich (4) fluidkommunizierend miteinander verbunden sind, mit einer Messvorrichtung (13), die zur Ermittlung des Füllstandes des Sperrfluids (5) geeignet ist, mit einer Ventileinrichtung (9) für die erste Gasleitung (7) und einer Ventileinrichtung (10) für die zweite Gasleitung (8), wobei die Ventileinrichtungen (9,10) dazu geeignet sind, die zugehörige erste bzw. zweite Gasleitung (7 bzw. 8) entweder mit einer gasabführenden Leitung (12,15) oder einer gaszuführenden Leitung (11,16) zu verbinden, mit einer Steuereinrichtung für die Ventileinrichtungen (9,10), welche die Ventileinrichtungen (9,10) derart steuert, dass, sobald die Messvorrichtung (13) die Erreichung eines bestimmten Füllstandes ermittelt, diejenige Ventileinrichtung (9,10), welche mit der gasabführenden Leitung (12,15) verbunden war, mit der gaszuführenden Leitung (11,16) verbindet, sowie diejenige Ventilleinrichtung (9,10), die mit der gaszuführenden Leitung (12,15), verbunden war, mit der gasabführenden Leitung (11,16) verbindet. Dieser Gasvolumenzähler ist dadurch gekennzeichnet, dass ein Messrohr (6) vorhanden ist, das in seinem unteren Bereich fluidkommunizierend mit den beiden Arbeitsrohren (2,3) verbunden ist, die Messvorrichtung (13) im oder am Messrohr (6) angeordnet ist und das Messrohr (6) in seinem oberen Bereich
i) entweder zur Atmosphäre offen ist oder
ii) mit einem mit einer Gastrenneinrichtung ausgestatteten Druckrohr über eine weitere, von der Steuereinrichtung gesteuerten Ventileinrichtung (20) mit den beiden Arbeitsrohren (2,3) verbindbar ist.

Fig. 1

**Beschreibung**

Die Erfindung betrifft einen Gasvolumenzähler mit einem ersten und einem zweiten sich nach oben erstreckenden, zur Aufnahme eines Sperrfluids geeigneten Arbeitsrohr, wobei beide Arbeitsrohre in ihrem oberen, freien Bereich in eine erste bzw. zweite Gasleitung übergehen und in ihrem unteren Bereich fluidkommunizierend miteinander verbunden sind, mit einer Messvorrichtung, die zur Ermittlung des Füllstandes des Sperrfluids geeignet ist, mit einer Ventileinrichtung für die erste Gasleitung und einer Ventileinrichtung für die zweite Gasleitung, mit einer Steuereinrichtung für die Ventileinrichtungen, wobei die Ventileinrichtungen dazu geeignet sind, die zugehörige erste bzw. zweite Gasleitung entweder mit einer gasabführenden Leitung oder einer gaszuführenden Leitung zu verbinden, und mit einer Steuereinrichtung für die Ventileinrichtungen, welche die Ventileinrichtungen derart steuert, dass, sobald die Messvorrichtung die Erreichung eines bestimmten Füllstandes ermittelt, diejenige Ventileinrichtung, welche mit der gasabführenden Leitung verbunden war, mit der gaszuführenden Leitung verbindet, sowie diejenige Ventilleinrichtung, die mit der gaszuführenden Leitung, verbunden war, mit der gasabführenden Leitung verbindet.

Die Erfindung betrifft ferner ein Verfahren zur Bestimmung eines Gasvolumens mit einem Gasvolumenzähler, bei welchem Verfahren

i) der Gasvolumenzähler mit einem ersten, ein Sperrfluid (5) enthaltendes Arbeitsrohr und einem damit fluidkommunizierend verbundenen zweiten, ebenfalls das Sperrfluid enthaltenden Arbeitsrohr ausgestattet ist und mit dem Gas, dessen Volumen ermittelt werden soll, kontinuierlich derart beaufschlagt wird, dass dieses Gas abwechselnd oben in das erste oder oben in das zweite Arbeitsrohr eingeleitet wird und das aus dem nicht beaufschlagten Arbeitsrohr austretende Gas aufgefangen wird,

ii) das Gas so lange in das erste Arbeitsrohr geleitet wird, bis das Sperrfluid einen bestimmten Füllstand erreicht hat, und das Gas anschließend in das zweite Arbeitsrohr geleitet wird, bis das Sperrfluid wieder einen bestimmten Füllstand erreicht hat,

iii) das Gas dann wieder in das erste Arbeitsrohr geleitet wird,

iv) dieser Zyklus so häufig wie gewünscht oder erforderlich wiederholt wird,

v) die Anzahl der Zyklen bestimmt wird,

vi) aus der Anzahl der Zyklen das Gasvolumen errechnet wird.

Bei chemischen und technischen Prozessen entstehen häufig Gase oder werden Gase verbraucht. Es besteht daher ein Bedürfnis und häufig auch die Notwendigkeit, die Volumina von strömenden Gasen präzise zu messen.

Für eine derartige Gasvolumenmessung kommen üblicherweise sogenannte Gaszähler zum Einsatz. Eine Art von derartigen Gaszählern stellen sogenannte Trommelgaszähler dar. Ein typischer Trommelgaszähler ist in dem Deutschen Gebrauchsmuster 20 0222589.8 beschrieben.

Es ist auch schon bekannt, ein Gasvolumen über die Verschiebung einer Flüssigkeitssäule zu messen. Diese Verschiebung kann beispielsweise über eine Laser-Distanzmessung ermittelt werden.

Ein Gasvolumenzähler beziehungsweise eine Gasflussmessvorrichtung, bei der das Gasvolumen über die Verschiebung einer Flüssigkeitssäule bestimmt wird, ist beispielsweise beschrieben von Jing Liu et al, in sensors and actuators B 97 (2004) 369-372 (man vergleiche auch www.sciencedirect.com).

Diese bekannte Vorrichtung besitzt ein U-förmiges Rohr, in dem sich eine Sperrflüssigkeit befindet. In einem Schenkel dieses Rohres befindet sich eine Einrichtung zur Ermittlung des oberen und unteren Füllstandes der Sperrflüssigkeit. Es handelt sich dabei um optische Koppler. Dieser Schenkel ist nach außen zur Atmosphäre hin offen.

Der andere Schenkel mündet in seinem oberen Bereich in eine Gasleitung, die mit einem Magnetventil ausgestattet ist, das ein 3-WegeVentil darstellt.

Zu Beginn einer Messung wird das zu messende Gas über das Magnetventil in den damit verbundenen Schenkel eingeleitet und drückt die Sperrflüssigkeit in diesem Schenkel nach unten. Die Sperrflüssigkeit in dem anderen, zur Atmosphäre hin offenen Schenkel wird dabei bis zum oberen Füllstand gedrückt.

Sobald der obere Füllstand erreicht ist, schaltet das Magnetventil um, so dass der Gaszufluss unterbrochen und das im zugehörigem Schenkel befindliche Gas über das Magnetventil in die Atmosphäre entweichen kann. Aus dem Zyklus der Gas-Flüssigkeitsverdrängung wird das Gasvolumen errechnet.

Nachteilig an dieser bekannten Vorrichtung ist der Umstand, dass das Gasvolumen immer nur intervallmäßig gemessen wird.

Eine weitere Gasflussmessvorrichtung ist aus der FR 7 561 46A bekannt, die zwei im unteren Bereich fluidkommunizierend miteinander verbundene Rohre besitzt, die in Ihrem oberen Bereich jeweils in eine Gasleitung übergehen. Diese Gasleitungen sind mit einem Vierwegeventil verbunden, das zwei Funktionsstellungen einnehmen kann. In der ersten Funktionsstellung wird ein Gas aus einer ersten Leitung in das erste Rohr eingeleitet. Dadurch sinkt der Fluidspiegel in diesem ersten Rohr und steigt in dem zweiten Rohr. Das oberhalb des Sperrfluids vorhandene Gas in dem zweiten Rohr wird aus letzterem heraus gedrückt und über das Vierwegeventil in eine gasabführende Leitung gelenkt. Dieses zweite Rohr ist mit einer Graduierung versehen, mit deren Hilfe das Volumen des verdrängten Gases bestimmt werden kann.

Nachdem das Sperrfluid in dem zweiten Rohr seinen Höchststand erreicht hat, wird das Vierwegeventil in die zweite Funktionsstellung gebracht, in der das Gas aus der Gaszuleitung in das zweite Rohr geleitet und durch Absinken des Sperrfluids im zweiten Rohr und Ansteigen des Sperrfluids im ersten Rohr aus letzterem herausgedrückt wird.

Diese bekannte Gasflussmessvorrichtung ist insofern nachteilig, als eine Umstellung des Vierwegeventils nur manuell erfolgen kann.

Eine kontinuierliche Messung des Gasvolumens ist nicht nur mit der oben beschriebenen Gasflussmessvorrichtung gemäß der FR 756 146 A sondern auch mit der aus der US 1,554,811 bekannten Gasflussmessvorrichtung möglich. Letztere Vorrichtung besitzt zwei im unteren Bereich fluidkommunizierend miteinander verbundene Abteile, die mit einem Sperrfluid gefüllt sind und in Ihrem oberen Bereich mit einer Ventil- und Steuereinrichtung versehen sind, die das zu messende Gas abwechselnd in eine der Kammern leitet. Dabei verändert sich der Füllstand in den Kammern. Die Betätigung der Ventil- und Steuereinrichtung erfolgt unter anderem mit Hilfe von Schwimmern, die durch das Sperrfluid betätigt werden.

Aufgabe der vorliegenden Erfindung ist es, ausgehend von dem geschilderten Stand der Technik, ein Verfahren und eine Vorrichtung bereitzustellen, bei der das Volumen eines strömenden Gases kontinuierlich bestimmt wird, ohne dass die Art und die Eigenschaften des zu vermessenden Gases die Messung, insbesondere die Genauigkeit der Messung, beeinflusst.

Gelöst wird diese Aufgabe einerseits durch einen Gasvolumenzähler gemäß der Lehre des Anspruchs 1.

Dieser Gasvolumenzähler ist mit einem ersten und einem zweiten sich nach oben erstreckenden Arbeitsrohr ausgestattet. Mit dem Begriff "nach oben erstrecken" soll zum Ausdruck gebracht werden, dass die Arbeitsrohre nicht horizontal sondern in einem Winkel zur Horizontalen angeordnet sind. Die Größe dieses Winkels beträgt zweckmäßigerweise 90°, so dass sich die Arbeitsrohre im Wesentlichen vertikal erstrecken. Zweckmäßigerweise erstrecken sich die Arbeitsrohre somit im wesentlichen parallel, während sich das Verbindungsrohr im wesentlichen horizontal erstreckt. Die Merkmale "horizontal, nach oben und vertikal" beziehen sich dabei auf den Betriebszustand bzw. auf den Zustand, in dem die erfindungsgemäße Vorrichtung zur Messung und Bestimmung des Gasvolumens in der Lage ist und eingesetzt wird. Die Erfindung ist jedoch nicht auf eine derartige Ausführungsform beschränkt. Vielmehr können auch schräg angeordnete Arbeitsrohre oder Abteile gemäß den aus dem Stand der Technik bekannten Vorrichtungen zum Einsatz gelangen.

Beide Arbeitsrohre gehen in ihrem oberen, freien Bereich oder Ende in eine erste bzw eine zweite Gasleitung über und sind in ihrem unteren Bereich fluidkommunizierend miteinander verbunden. Das erste Arbeitsrohr geht somit in die erste Gasleitung über, während das zweite Arbeitsrohr in die zweite Gasleitung übergeht.

Sowohl die erste als auch die zweite Gasleitung des erfindungsgemäßen Gasvolumenzählers ist mit einer Ventileinrichtung ausgestattet. Somit sind die von dem ersten Arbeitsrohr wegführende erste Gasleitung und auch die von dem zweiten Arbeitsrohr wegführende zweite Gasleitung jeweils mit einer Ventileinrichtung ausgestattet und folglich gasdicht verbunden.

Alle Ventileinrichtungen können die zugehörige erste bzw. zweite Gasleitung entweder mit einer gasabführenden Leitung oder einer gaszuführenden Leitung verbinden.

Der erfindungsgemäße Gasvolumenzähler ist mit einer Messvorrichtung ausgestattet, welche zur Ermittlung des Füllstandes des Sperrfluids geeignet ist.

Die Steuereinrichtung des erfindungsgemäßen Gasvolumenzählers steuert die Ventileinrichtungen derart, dass, sobald die Messvorrichtung die Erreichung eines bestimmten Füllstandes ermittelt, diejenige Ventileinrichtung, welche mit der gasabführenden Leitung verbunden war, mit der gaszuführenden Leitung verbindet, sowie diejenige Ventileinrichtung, die mit der gaszuführenden Leitung, verbunden war, mit der gasabführenden Leitung verbindet.

Die Ventileinrichtungen können somit mindestens zwei Funktionsstellungen einnehmen. Ist eine Ventileinrichtung mit der gasabführenden Leitung verbunden, dann ist die andere mit der gaszuführenden Leitung verbunden. Nach Umstellung zu einem Zeitpunkt, der durch die Erreichung eines bestimmten Füllstand bestimmt wird, wird die Ventileinrichtung, die zuvor mit der gasabführenden Leitung verbunden ist, mit der gaszuführenden Leitung verbunden, während die Ventileinrichtung, die mit der gaszuführenden Leitung verbunden war, mit der gasabführenden Leitung verbunden wird.

Der erfindungsgemäße Gasvolumenzähler, der auch als Gasflussmessvorrichtung bezeichnet werden kann, ist unter anderem dadurch gekennzeichnet, dass ein Messrohr vorhanden ist, das in seinem unteren Bereich fluidkommunizierend mit den beiden Arbeitsrohren verbunden ist.

Dieses Messrohr ist somit zusätzlich zu den sowohl oben als auch nachstehend beschriebenen zwei Arbeitsrohren vorhanden und kann auch als drittes Rohr bezeichnet werden.

Ein weiteres kennzeichnendes Merkmal besteht darin, dass die Messvorrichtung im oder am Messrohr angeordnet ist. Mit anderen Worten, die Messvorrichtung befindet sich nicht an oder in den Arbeitsrohren, sondern getrennt davon.

Die beiden Arbeitsrohre entsprechen in ihrer Funktion und Wirkungsweise den aus dem Stand der Technik bekannten Arbeitsrohren bzw. Abteilen. Mit anderen Worten, der Gasfluss wird durch geeignete Ventile wechselseitig in jeweils eines der Arbeitsrohre eingeleitet, so dass die darin befindliche Flüssigkeitssäule ausgehend von einer neutralen Nulllinie durch den Gasdruck alternierend fällt bzw. steigt.

Das Messrohr kann mit den Arbeitsrohren an beliebiger Stelle, beispielsweise nur im unteren Bereich eines Arbeitsrohres mit dem Innenraum, der durch die beiden Arbeitsrohre und den kommunizierenden Bereich gebildet wird, verbunden sein. Zweckmäßigerweise wird das Messrohr jedoch in demjenigen unteren Bereich, in dem die beiden Arbeitsrohre verbunden sind, fluidkommunizierend damit verbunden.

Durch die kommunizierende Verbindung des Messrohres mit den beiden Arbeitsrohren steigt die Flüssigkeitssäule im Messrohr ausgehend von der genannten neutralen Nulllinie durch das verdrängte Flüssigkeitsvolumen im jeweils aktiven, d.h. mit Gasdruck beaufschlagten Arbeitsrohr immer nach oben. Im Moment des Umschaltens des Gasstromes vom ersten Arbeitsrohr zum zweiten Arbeitsrohr oder vice versa fällt die Flüssigkeitssäule im Messrohr wieder zurück, in den meisten Fällen bis auf die neutrale Nulllinie, die hier auch als 0-Linie bezeichnet wird.

Wird dann das andere Arbeitsrohr mit Gas beaufschlagt, dann steigt die Flüssigkeitssäule des Sperrfluids im Messrohr wieder an, bis eine erneute Umschaltung erfolgt. Durch die Anordnung der Messeinrichtung an einem zusätzlichen Rohr, nämlich dem Messrohr, wird die Messung nicht durch Faktoren beeinflusst, welche durch die Ausgestaltung der Arbeitsrohre und/oder das zu vermessende Gas beeinflusst werden können.

Gemäß einer ersten Variante der Erfindung ist dieses Messrohr in seinem oberen Bereich zur Atmosphäre offen. Es handelt sich dabei um eine drucklose Variante, bei der der Innendruck im Messrohr dem Atmosphärendruck und somit dem Außendruck entspricht.

Bei einer zweiten Variante ist das Messrohr im oberen Bereich mit einem Druckrohr druckdicht verbunden. Dieses Druckrohr ist mit einer Gastrennvorrichtung und über eine weitere Ventileinrichtung mit dem oberen Bereich der beiden Arbeitsrohre derart verbindbar, dass das Messrohr entweder mit dem ersten Arbeitsrohr oder dem zweiten Arbeitsrohr verbunden ist. Diese Variante wird hier auch als Druckvariante bezeichnet.

Im Inneren des Messrohres, das zur Atmosphäre hin geschlossen ist, herrscht somit ein Innendruck, der dem Innendruck im damit verbundenen Arbeitsrohr entspricht.

Bei dieser Variante kann im Gesamtsystem des erfindungsgemäßen Gasvolumenzählers ein Druck herrschen, der sich vom Atmosphärendruck unterscheidet und insbesondere höher ist.

Um zu verhindern, dass das Gas im Innenraum des Messrohres einerseits und das Messgas im Innenraum des mit dem Messrohr verbundenen Arbeitsrohres andererseits in Kontakt kommt oder sich sogar damit vermengt bzw. vermischt, ist im Druckrohr zweckmäßigerweise vor der Ventileinrichtung eine Gastrenneinrichtung vorgesehen.

Diese Gastrenneinrichtung kann beliebig ausgestaltet sein, solange sie eine Trennung der genannten Gase bewirkt. Anders ausgedrückt: Die Gastrenneinrichtung soll verhindern, dass die beiden Gase in Kontakt miteinander kommen und sich vermischen.

Bei dieser Gastrennvorrichtung handelt es sich vorzugsweise um ein mit einem Sperrfluid gefüllten, zwischen dem Messrohr und der weiteren Ventileinrichtung angeordneten U-Rohr. Ein Schenkel des U-Rohres ist in seinem oberen Bereich mit der weiteren Ventileinrichtung verbunden, während der andere Schenkel in seinem oberen Bereich mit dem oberen Bereich des Messrohres verbunden ist.

Diese weitere Ventileinrichtung wird mit Hilfe einer Steuereinrichtung kontrolliert und gesteuert. Diese Steuereinrichtung kann die gleiche sein, welche auch zur Steuerung der Ventileinrichtungen für die beiden Arbeitsrohre eingesetzt wird. Diese Steuereinrichtung steuert die weitere Ventileinrichtung derart, dass, sobald die anderen Ventileinrichtungen umgesteuert werden, das Druckrohr, das zuvor mit dem Arbeitsrohr, aus dem Messgas herausgedrängt wird, mit demjenigen Arbeitsrohr verbunden wird, aus welchem nach Umsteuerung das Messgas abgeführt werden soll.

Vorzugsweise erfolgt die Messung des Füllstandes bzw. Pegels des Sperrfluids im Inneren des Volumens des Messrohres.

Wenn davon die Rede ist, dass die Messvorrichtung im Messrohr angeordnet ist, dann soll dadurch zum Ausdruck gebracht werden, dass mindestens der zur Messvorrichtung gehörende Sensor innerhalb des Messrohres angeordnet ist. Es ist durchaus möglich, dass weitere funktionale Teile der Messvorrichtung sowohl innerhalb als auch außerhalb des Messrohres angeordnet sind.

Nach einer weiteren bevorzugten Ausführungsform, ist die Messvorrichtung zur Durchführung eines Messverfahrens geeignet, bei dem die Bestimmung bzw. Messung des Abstands zwischen einem Sensor und der Oberfläche des Sperrfluids berührungslos erfolgt. Auch in diesem Falle befindet sich der Sensor vorzugsweise im Inneren des Messrohres.

Weiterhin bevorzugt handelt es sich bei diesem Messverfahren um ein Ultraschall- oder Laser-Messverfahren. Die Verschiebung der Säule des Sperrfluids im Messrohr wird kontinuierlich und somit analog durch dieses berührungslose Verfahren zur Messung des Abstandes zwischen dem Sensor und der Oberfläche des Sperrfluids gemessen.

Die Messung des Volumens bei dieser bevorzugten Ausführungsform erfolgt in einem Messraum der nur mit Luft oder auch einem Schutzgas gefüllt sein kann, jedoch nicht mit dem Messgas gefüllt ist.

Dadurch wird erreicht, dass die Messung durch das zu messende Gas bzw. Messgas nicht nachteilig beeinflusst wird. So ist beispielsweise bei der Messung mit Ultraschall die Messgenauigkeit von der Gasdichte abhängig. $CO_2$ kann bis zu einem Ausfall des Systems führen. Bei einem Laser kann es zu Problemen mit entzündlichen zu vermessenden Gasen führen.

Die Querschnittsform und auch die Querschnittsfläche des Messrohres kann beliebig sein und der Querschnittsform und auch der Querschnittsfläche der Arbeitsrohre entsprechen. Vorzugsweise besitzt das Messrohr jedoch eine geringere Querschnittsfläche als diejenige der Arbeitsrohre. Dadurch kann die Auflösung, d.h. die Höhe des Verschiebevolumens vergrößert werden. Die Querschnittsform und auch die Querschnittsfläche der beiden Arbeitsrohre sind im Übrigen zweckmäßigerweise die Gleichen.

Bei der Messvorrichtung kann es sich aber auch um eine magnetisch betätigbare oder kapazitive Vorrichtung handeln.

Vorzugsweise ist nur eine gasabführende Leitung und auch nur eine gaszuführende Leitung vorhanden, die je nach Ventilstellung entweder mit dem ersten oder dem zweiten Arbeitsrohr verbunden sind.

Bei Betrieb des erfindungsgemäßen Gasvolumenzählers wird das Gas, dessen Volumen bestimmt werden soll, abwechselnd immer nur in eines der beiden Arbeitsrohre geleitet.

Wenn Gas in das erste Arbeitsrohr geleitet werden soll, muss die Ventilstellung natürlich entsprechend sein, nämlich derart, dass das erste Arbeitsrohr mit der gaszuführenden Leitung verbunden ist, durch welche das Gas in das erste Arbeitsrohr strömen kann. Außerdem verbindet die Ventileinrichtung das zweite Arbeitsrohr mit der gasabführenden Leitung, damit das zuvor im zweiten Arbeitsrohr oberhalb des Sperrfluids befindliche Gas aus dem zweiten Arbeitsrohr herausgeleitet werden kann.

Sobald Gas in das erste Arbeitsrohr geleitet bzw. gedrückt wird, senkt sich der Füllstand des Sperrfluids im ersten Arbeitsrohr ab, während er im zweiten Arbeitsrohr und auch im Messrohr ansteigt.

Sobald ein bestimmter Füllstand, der nachstehend noch näher erläutert wird, erreicht wird, wird dies durch die Messvorrichtung ermittelt. Die mit der Messvorrichtung verbundene Steuereinrichtung schaltet daraufhin die Ventileinrichtungen um, so dass die Ventileinrichtung für das erste Arbeitsrohr mit der gasabführenden Leitung (die gaszuführende Leitung wird geschlossen) und die Ventileinrichtung des zweiten Arbeitsrohres mit der gaszuführenden Leitung (die gasabführende Leitung wird geschlossen) verbunden wird.

Nach dieser Umschaltung strömt das Gas nunmehr in das zweite Arbeitsrohr und drückt das darin befindliche Sperrfluid nach unten, während das Sperrfluid im ersten Arbeitsrohr und wiederum auch im Messrohr angehoben wird. Das in diesem ersten Arbeitsrohr befindliche Gas wird aus letzterem in die gasabführende Leitung hinausdrückt.

Sobald das Sperrfluid einen bestimmten Füllstand erreicht hat, wird dies durch die Messvorrichtung ermittelt. Daraufhin wird die Ventileinrichtung wieder umgeschaltet, so dass der zuvor beschrieben Zustand wieder hergestellt wird.

Dieses Hin- und Herschalten vom ersten Zustand in den zweiten Zustand und wieder zurück kann beliebig oft wiederholt werden. Ein einmaliges Hin- und Herschalten wird hier als Zyklus bezeichnet. Aus der Anzahl der Zyklen kann das Gasvolumen errechnet werden. Dafür muss natürlich bekannt sein, wie groß das Gasvolumen ist, welches bei Durchlaufen eines einzelnen Zyklus durch den Gasvolumenzähler strömt. Dies kann durch Kalibrieren oder auf andere bekannte Weise bestimmt werden.

Der erfindungsgemäße Gasvolumenzähler stellt vorzugsweise einen U-Rohr-Gaszähler dar. Vorzugsweise sind die Arbeitsrohre und die Verbindung zwischen diesen beiden Arbeitsrohren sowie das Messrohr aus Glas gefertigt und insbesondere einstückig

Die Ventileinrichtung stellt vorzugsweise ein 3/2-Wege-Ventil dar.

Die eingangs genannte Aufgabe wird auch gelöst durch ein Verfahren zur Bestimmung eines Gasvolumens mit einem Gasvolumenzähler, der mit einem ersten, ein Sperrfluid enthaltendes Arbeitsrohr und einem damit fluidkommunizierend verbundenen zweiten, ebenfalls das Sperrfluid enthaltenden Arbeitsrohr ausgestattet ist und der mit dem Gas, dessen Volumen ermittelt werden soll, kontinuierlich derart beaufschlagt wird, dass dieses Gas abwechselnd oben in das erste oder oben in das zweite Arbeitsrohr eingeleitet wird. Das aus dem nicht beaufschlagten Arbeitsrohr austretende Gas wird aufgefangen. Das Gas wird so lange in das erste Arbeitsrohr geleitet, bis das Sperrfluid einen bestimmten Füllstand erreicht hat. Anschließend wird das Gas in das zweite Arbeitsrohr geleitet, bis das Sperrfluid wieder einen bestimmten Füllstand erreicht hat. Das Gas wird dann wieder in das erste Arbeitsrohr geleitet. Dieser Zyklus wird so häufig wie gewünscht oder erforderlich wiederholt Die Anzahl der Zyklen wird bestimmt. Aus der Anzahl der Zyklen wird das Gasvolumen errechnet.

Dieses Verfahren ist dadurch gekennzeichnet, dass der Füllstand in einem mit den Arbeitsrohren fluidkommunizierend verbundenen Messrohr, das entweder zur Atmosphäre hin offen ist oder mit einem Druckrohr, das mit einer Gastrenneinrichtung ausgestattet ist, über eine weitere Ventileinrichtung mit den beiden Arbeitsrohren verbindbar ist, bestimmt wird.

Wenn im Rahmen der vorliegenden Unterlagen von einem bestimmten Füllstand oder einem bestimmten Pegelstand des Sperrfluids die Rede ist, dann handelt es sich dabei zweckmäßigerweise um einen oberen Füllstand. Mit anderen Worten, die Füllstandslinie stellt eine obere Füllstandslinie dar und liegt oberhalb der 0-linie. Diese 0-Linie (Nulllinie) wird dadurch festgelegt dass das ganze System in Ruhe ist und nicht mit Druck beaufschlagt ist.

Die Höhendifferenz zwischen 0-Linie und oberer Füllstandslinie hängt natürlich von den Abmessungen der Arbeitsrohre usw. ab. Üblicherweise kann diese obere Füllstandslinie beliebig festgelegt werden. Sobald die Messeinrichtung feststellt, dass der Füllstand bzw. Pegelstand diese obere Füllstandslinie erreicht hat, erfolgt die oben näher beschriebene und nachstehend auch noch eingehender dargestellte Umschaltung.

Der erfindungsgemäße Gasvolumenzähler und das erfindungsgemäße Verfahren werden anhand der beigefügten Zeichnungen näher erläutert. Dabei zeigen:

Figur 1    ein Funktionsschema eines erfindungsgemäßen Gasvolumenzählers gemäß der ersten, drucklosen Variante in Form eines U-Rohr-Gaszähler. In diesem Funktionsschema sind drei Zustände dargestellt.

Figur 2    ein Funktionsschema einer weiteren Ausführungsform des in der Figur 1 dargestellten Gasvolumenzählers gemäß der 2. Variante bzw. Druckvariante.

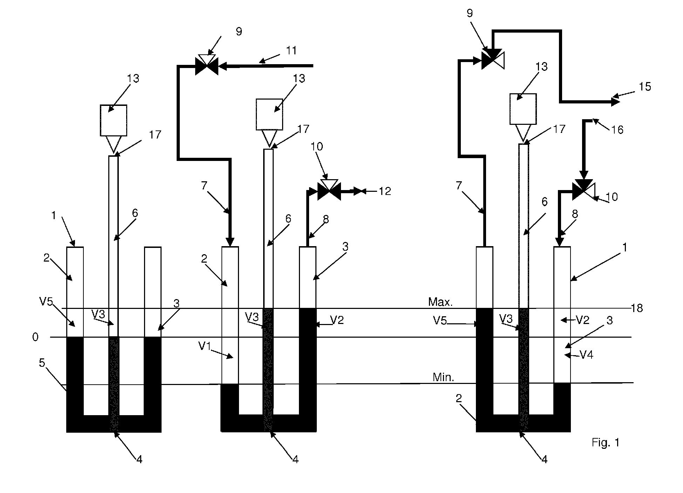

In dem Funktionsschema gemäß Figur 1 ist ein U-Rohr-Gaszähler schematisch in drei Zuständen gezeigt.

Der Gasvolumenzähler 1 in Form eines U-Rohr-Gaszählers besitzt ein erstes Arbeitsrohr 2 und ein zweites Arbeitsrohr 3, die sich in etwa senkrecht nach oben erstrecken und in ihrem unteren Bereich durch ein in etwa horizontales Verbindungsrohr 4 fluidkommunizierend miteinander verbunden sind. Das erste Arbeitsrohr 2 stellt den linken Schenkel einer U-Form dar, während das zweite Arbeitsrohr 3 den rechten Schenkel darstellt.

In den Gasvolumenzähler 1 (genauer in die Arbeitsrohre 2, 3 und in das Verbindungsrohr 4) ist ein Sperrfluid 5 eingefüllt. Bei dem im Funktionsschema links gezeigten Zustand befindet sich das Sperrfluid 5 in beiden Arbeitsrohren 2,3 in etwa auf der gleichen Höhe. Dies stellt den normalen Füllstand dar und wird hier auch als 0-Linie bezeichnet.

Zwischen den beiden Arbeitsrohren 2,3 ist ein Messrohr 6 angeordnet, das unten mit dem Verbindungsrohr 4 fluidkommunizierend verbunden ist, so dass sich das Sperrfluid 5 auch im zur Atmosphäre 17 hin offenen Messrohr 6 auf der gleichen Höhe wie in den Arbeitsrohren 2,3 befindet. Dieses Messrohr 6 erstreckt sich in etwa senkrecht nach oben, kann sich jedoch auch schräg nach oben erstrecken. Zudem ist seine Anordnung zwischen den Arbeitsrohren 2,3 nicht zwingend. Vielmehr kann es auch seitlich von einem der beiden Arbeitsrohren 2,3 angeordnet sein. Erforderlich ist lediglich, dass diese Messrohr 6 mit dem Sperrfluid verbunden ist.

Wie man aus der mittleren Darstellung in dem Funktionsschema ersieht, sind das Arbeitsrohr 2 in seinem oberen, freien Bereich mit einer ersten Gasleitung 7 und das Arbeitsrohr 3 in seinem oberen, freien Bereich mit einer zweiten Gasleitung 8 verbunden bzw. ausgestattet. Arbeitsrohr 2/Gasleitung 7 und Arbeitsrohr 3/Gasleitung 8 stellen sicher, dass im Gasvolumenzähler 1 bzw. in den Arbeitsrohren 2, 3 befindliches Gas nicht nach außen in die Atmosphäre gelangen kann.

Die Gasleitung 7 ist mit einem 3/2-Wege-Ventil 9 versehen, während die Gasleitung 8 mit einem 3/2-Wege-Ventil 10 versehen ist.

Die im Funktionsschema in der Mitte gezeigte Darstellung beschreibt denjenigen Zustand, in dem der linke Schenkel und somit das Arbeitsrohr 2 mit demjenigen Gas, dessen Volumen ermittelt werden soll, beaufschlagt und somit befüllt wird. Dieses Gas wird über eine gaszuführende Leitung 11 zum Ventil 9 in die Gasleitung 7 und dann in das erste Arbeitsrohr 2 geführt.

Durch das zuströmende Gas wird das Sperrfluid 5 im ersten Arbeitsrohr 2 heruntergedrückt und hebt das Sperrfluid 5 sowohl im Messrohr 6 als auch im zweiten Arbeitsrohr 3 an. Das oberhalb des Sperrfluids 5 im zweiten Arbeitsrohr 3 befindliche Gas wird durch die Gasleitung 8 und das Ventil 10 zu einer gasabführenden Leitung 12 gedrückt bzw. bewegt.

Solange Gas in das Arbeitsrohr 2 strömt und dadurch dort der Füllstand des Sperrfluids 5 abgesenkt wird, steigt der Füllstand, den man auch als Pegelstand bezeichnen kann, sowohl im Arbeitsrohr 3 als auch im Messrohr 6 an.

Der Füllstand des Sperrfluids 5 im Messrohr 6 wird mit einer Messvorrichtung 13, die nachstehend näher erläutert ist, ermittelt bzw. bestimmt.

Sobald die Messvorrichtung 13 einen bestimmten Füllstand ermittelt und der Steuereinrichtung übermittelt hat, wird das Ventil 9 der Gasleitung 7 umgestellt bzw. bewegt, so dass die Gasleitung 7 mit einer gasabführenden Leitung 15 verbunden wird, während die gaszuführende Leitung 11 geschlossen wird.

Gleichzeitig bewirkt die nicht gezeigte Steuereinrichtung, die mit den Ventileinrichtungen und auch der Messvorrichtung 13 auf geeignete, bekannte Weise (beispielsweise elektrisch) verbunden ist, dass die Gasleitung 8 mittels des Ventils 10 mit einer gaszuführenden Leitung 16 verbunden wird, während die gasabführende Leitung 12 geschlossen wird.

Letzterer Zustand der Ventile 9,10 ist in dem Funktionsschema gemäß Figur 1 in der rechten Darstellung gezeigt.

Nach der Umsteuerung der Ventile 9,10 kann der Füllstand in dem Arbeitsrohr 3 und dem Messrohr 6 mehr oder weniger abrupt abfallen und der Füllstand im Arbeitsrohr 2 sowie im Messrohr 7 entsprechend ansteigen, da im System ein Druckausgleich erfolgt.

Allerdings strömt bei dieser Ventilstellung nun das Gas, dessen Volumen zu ermitteln ist, über das Ventil 10 und die Gasleitung 8 in das zweite Arbeitsrohr 3, wodurch das Sperrfluid im zweiten Arbeitsrohr 3 nach unten gedrückt und korrespondierend im Arbeitsrohr 2 und im Messrohr 6 ebenfalls wieder nach oben gedrückt wird.

Der Füllstand des Sperrfluids 5 sinkt somit nicht unter die 0-Linie (man vergleiche das Funktionsschema) sondern bewegt sich zwischen dieser 0-Linie und der oberen Füllstandslinie 18.

Sobald das Sperrfluid 5 den oberen Füllstand im Messrohr 6 wieder erreicht hat, werden die Ventile 9 und 10 gleichzeitig wieder umgeschaltet, so dass der vorher geschilderte, in der mittleren Ansicht im Funktionsschema gezeigte Zustand der Ventileinrichtung wieder erreicht wird.

Beginnt man einen Messzyklus bei der 0-Linie, dann kann dieser beendet werden, sobald das Sperrfluid diese 0-Linie das zweite Mal wieder erreicht hat.

Bei Beginn dieses Messzyklus befindet sich das Sperrfluid 5 in allen Rohren bei der 0-Linie. Durch Beaufschlagung des Messrohres 2 mit dem zu messenden Gas steigt dass Sperrfluid, bis es die Max.-Linie im Messrohr 6 erreicht hat. Das zugeführte Gasvolumen entspricht $V_1$ ($=V_3 + V_2$).

Danach wird umgeschaltet. Durch die Schwerkraft des Sperrfluids 5 erfolgt eine Druckreduzierung, so dass das Sperrfluid 5 im Messrohr 6 und im zweiten Arbeitsrohr 3 auf die 0-Linie absinkt, während es im ersten Arbeitsrohr 2 auf die 0-Linie ansteigt. Dabei wird nachströmendes Gas aus der Gas zuführenden Leitung 16 in das zweite Arbeitsrohr 3 geleitet. Das zugeführte Gasvolumen entspricht $V_1$ ($=V_2 + V_3$).

Das insgesamt zugeführte Gasvolumen entspricht $V_3 + V_2 + V_3 + V_2$. Das Sperrfluid 5 hat diese 0-linie das erste Mal während dieses Messzyklus erreicht. Der erste Halb-Zyklus ist beendet.

Anschließend wird das zweite Arbeitsrohr 3 mit Gas beaufschlagt, bis das Sperrfluid 5 die Max.-Linie im Messrohr 6 erreicht hat. Das zugeführte Gasvolumen entspricht $V_4$ ($=V_3 + V_5$).

Danach wird erneut umgeschaltet. Durch die Schwerkraft des Sperrfluids 5 sinkt das Sperrfluid 5 im Messrohr 6 und im ersten Arbeitsrohr 2 auf die 0-Linie ab, während es im zweiten Arbeitsrohr 3 auf die 0-Linie ansteigt. Durch die temporäre Druckreduzierung strömt Gas aus der Gas zuführenden Leitung 11 in das erste Arbeitsrohr 2 nach. Das zugeführte Gasvolumen entspricht $V_3 + V_5$. Das Sperrfluid 5 hat diese 0-linie das zweite Mal erreicht. Der zweite Halb-Zyklus und somit der erste Gesamt-Messzyklus ist beendet.

Das gemessene Gesamt-Gasvolumen entspricht

$$(V_2 + V_3) + (V_2 + V_3) + (V_3 + V_5) + (V_3 + V_5) \, .$$

Alle diese Volumina sind im Funktionsschema zeichnerisch dargestellt.

Der oben geschilderte Messzyklus kann natürlich auch dann begonnen werden, wenn das Sperrfluid 5 die obere Füllstandslinie 18 (Max.-Linie im Funktionsschema gemäß Figur 1) im zweiten Arbeitsrohr 3 und somit auch im Messrohr 6 erreicht hat. Der Messzyklus kann in diesem Fall dann beendet werden, wenn das Sperrfluid 5 diese obere Füllstandslinie 18 im zweiten Arbeitsrohr 3 erneut erreicht hat.

Ein derartiger Messzyklus kann so häufig und solange wiederholt werden, wie dies erforderlich ist. Es ist auch möglich, Mischformen der oben genannten Messzyklen anzuwenden.

Die relevanten Volumina werden zweckmäßigerweise durch Kalibrieren bzw. Eichen des Gasvolumenzählers bestimmt und sind somit bekannt, bevor eine Messung durchgeführt wird. Durch dieses Kalibrieren kann auch festgestellt werden, ob die Volumina (genauer Innenvolumina) der Arbeitsrohre 2 und 3 gleich sind, so dass $V_1 = V_4$. und $V_2 = V_5$.

An dieser Stelle ist zu betonen, dass immer nur der Füllstand im Messrohr 6 und somit nicht in den Arbeitsrohren 2 und 3 bestimmt wird. Dieser Füllstand im Messrohr 6 kann immer nur im Bereich von einschließlich der 0-Linie bis einschließlich zur oberen Füllstandslinie 18 liegen. Der obere Füllstand im nicht mit Gas beaufschlagten Arbeitsrohr 2 bzw. 3 entspricht dem Füllstand im Messrohr 6.

Besitzen die Arbeitsrohre 2,3 unterschiedlich große Innenvolumina, dann kann es durchaus sein, dass der Füllstand in dem mit Gas beaufschlagten Arbeitsrohr 2 bzw. 3 oberhalb oder unterhalb der unteren Füllstandslinie bzw. der Min.-Linie liegt, wenn die Füllstand des Sperrfluids 5 im Messrohr 6 auf der oberen Füllstandslinie 18 (Max.-Linie) liegt. Die untere Füllstandslinie in den Arbeitsrohren 2 und 3 kann daher unterschiedlich sein. Sie wird jedoch nicht vermessen und beeinflusst daher auch die Messung des Gasvolumens nicht.

Das Gesamtvolumen des Gases, das den Gasvolumenzähler 1 in einem oder mehreren Messzyklen durchströmt hat, kann somit auf einfachem Wege bestimmt werden.

Das gesamte Gas, dessen Volumen zu bestimmen ist, strömt somit durch den Gasvolumenzähler 1 und nicht irgendwie daran vorbei. Die Messung erfolgt kontinuierlich.

Die Messung der Füllstandshöhe bzw. des Füllstandes im Messrohr 6 geschieht jedoch immer nur in Anwesenheit des im Messrohr 6 befindlichen Gases, das ein anderes sein kann als das zu bestimmende Gas. Die Messung ist daher von der Art des zu vermessenden Gasen völlig unabhängig. Durch die Art des zu vermessenden Gases verursachte Messfehler treten nicht auf.

Zweckmäßigerweise kommen Messvorrichtungen zum Einsatz, welche den Abstand zwischen der Oberfläche des Sperrfluids und dem Sensor ermitteln. Es kann sich dabei vorzugsweise um Ultraschall- und Laser-Messungen handeln.

Die Zahl dieser Zyklen und die entsprechende Berechnung kann mit Hilfe der nicht gezeigten Steuereinrichtung ermittelt bzw. berechnet werden.

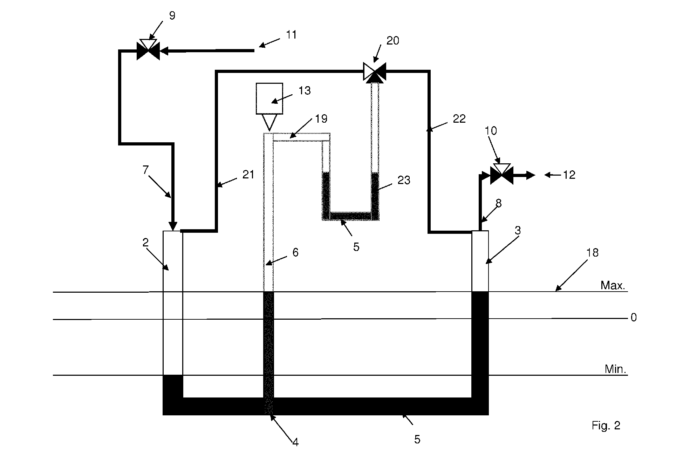

Die im zweiten Funktionsschema in der Figur 2 dargestellte zweite Variante bzw. Druckvariante des erfindungsgemäßen Gasvolumenzählers unterscheidet sich von der drucklosen Variante gemäß dem ersten, in der Figur 1 gezeigten Funktionsschema dadurch, dass die Messrohre nicht zur Atmosphäre hin offen ist.

Nachstehend werden nur die Unterschiede zu der drucklosen Variante geschildert. Ansonsten entspricht die Druckvariante gemäß dem zweiten, in der Figur 1 gezeigten Funktionsschema der drucklosen Variante gemäß dem ersten Funktionsschema.

Bei dem Messrohr 6 der im zweiten Funktionsschema gezeigten Druckvariante geht das Messrohr 6 im oberen Bereich in ein Druckrohr 19 über, welches das Messrohr 6 mit einer weiteren Ventileinrichtung 20 verbindet. Diese Ventileinrichtung 20, bei der es sich zweckmäßigerweise um ein 3/2-Wege-Ventil handelt, ist in der Lage, das Druckrohr 19 entweder mit dem Innenraum des ersten Arbeitsrohres 2 mittels einer Leitung 21 oder mit dem Innenraum des zweiten Arbeitsrohres 3 mittels einer Leitung 22 gas- und druckdicht zu verbinden.

Bei dem im zweiten Funktionsschema gezeigten Zustand ist das Druckrohr 19 mit über die Leitung 22 mit dem Innenraum des zweiten Arbeitsrohres 3 verbunden.

Sobald die Ventileinrichtungen 9 und 10 wie oben beschrieben umgeschaltet werden, findet auch eine Umschaltung der weiteren Ventileinrichtung 20 derart statt, dass das Druckrohr 19 über die Leitung 21 mit dem ersten Arbeitsrohr 2 druck- und gasdicht verbunden wird. Zweckmäßigerweise steuert die nicht gezeigte Steuereinrichtung alle drei Ventileinrichtungen 9, 10 und 20 gemeinsam und besorgt eine gleichzeitige Umschaltung im oben beschriebenen Sinne.

Zwischen der weiteren Ventileinrichtung 20 und dem Messrohr 6 ist eine Gastrennvorrichtung ausgebildet, bei der es sich um ein U-Rohr handelt, das mit einem Sperrfluid 5 gefüllt ist. Dieses Sperrfluid ist zweckmäßigerweise das gleiche wie das Sperrfluid 5 in den beiden Arbeitsrohren 2 und 3 sowie dem Messrohr 6.

Der rechte Schenkel des im zweiten Funktionsschema gezeigten U-Rohres 23 ist mit der weiteren Ventileinrichtung verbunden, während der andere Schenkel des U-Rohres 23 mit dem Messrohr 6 verbunden ist. Diesen beiden Schenkel sind - wie bei einem U-Rohr üblich - durch einen sich in etwa horizontal erstreckenden Bodenschenkel verbunden.

Das Sperrfluid 5 im U-Rohr 23 trennt das im Inneren des Messrohres 6 befindliche Gas von dem in Inneren der Arbeitsrohre 2 bzw. 3 befindlichen Messgas. Zudem kann durch das U-Rohr 23 ein Druckausgleich zwischen dem Messrohr 6 einerseits und dem damit verbundenen Arbeitsrohr 2 bzw. 3 bewirkt werden, beispielsweise wenn ein Umschalten der Ventileinrichtungen 9,10 erfolgt.

Rein vorsorglich wird darauf hingewiesen, dass der oben geschilderte Ablauf, bei dem zuerst das erste Arbeitsrohr 2 bzw. der linke Schenkel und dann das zweite Arbeitsrohr 3 bzw. der rechte Schenkel mit Gas befüllt werden, auch ohne weiteres umgedreht werden kann.

**Bezugszeichenliste**

1 Gasvolumenzähler
2 erstes Arbeitsrohr
3 zweites Arbeitsrohr
4 Verbindungsrohr
5 Sperrfluid
6 Messrohr
7 erste Gasleitung für das erste Arbeitsrohr 2
8 zweite Gasleitung für das zweite Arbeitsrohr 3
9 3/2-Wege-Ventil der Gasleitung 7
10 3/2-Wege-Ventil der Gasleitung 8
11 gaszuführende Leitung für Ventil 9
12 gasabführende Leitung für Ventil 10
13 Messvorrichtung
14 erste Messvorrichtung
15 gasabführende Leitung für Ventil 9

16    gaszuführende Leitung für Ventil 10
17    Atmosphäre
18    obere Füllstandslinie
19    Druckrohr
20    Weitere Ventileinrichtung
21    Leitung zum ersten Arbeitrohr 2
22    Leitung zum zweiten Arbeitsrohr 3
23    U-Rohr im Druckrohr

**Patentansprüche**

1.    Gasvolumenzähler (1) mit einem ersten (2) und einem zweiten (3) sich nach oben erstreckenden, zur Aufnahme eines Sperrfluids (5) geeigneten Arbeitsrohr, wobei beide Arbeitsrohre (2,3) in ihrem oberen, freien Bereich in eine erste (7) bzw. zweite (8) Gasleitung übergehen und in ihrem unteren Bereich (4) fluidkommunizierend miteinander verbunden sind,
mit einer Messvorrichtung (13), die zur Ermittlung des Füllstandes des Sperrfluids (5) geeignet ist,
mit einer Ventileinrichtung (9) für die erste Gasleitung (7) und einer Ventileinrichtung (10) für die zweite Gasleitung (8), wobei die Ventileinrichtungen (9,10) dazu geeignet sind, die zugehörige erste bzw. zweite Gasleitung (7 bzw. 8) entweder mit einer gasabführenden Leitung (12,15) oder einer gaszuführenden Leitung (11,16) zu verbinden,
mit einer Steuereinrichtung für die Ventileinrichtungen (9,10), welche die Ventileinrichtungen (9,10) derart steuert, dass, sobald die Messvorrichtung (13) die Erreichung eines bestimmten Füllstandes ermittelt, diejenige Ventileinrichtung (9, 10), welche mit der gasabführenden Leitung (12,15) verbunden war, mit der gaszuführenden Leitung (11,16) verbindet, sowie diejenige Ventilleinrichtung (9,10), die mit der gaszuführenden Leitung (12,15), verbunden war, mit der gasabführenden Leitung (11,16) verbindet,
**dadurch gekennzeichnet, dass**
ein Messrohr (6) vorhanden ist, das in seinem unteren Bereich fluidkommunizierend mit den beiden Arbeitsrohren (2,3) verbunden ist,
die Messvorrichtung (13) im oder am Messrohr (6) angeordnet ist und das Messrohr (6) in seinem oberen Bereich

     i) entweder zur Atmosphäre offen ist oder
     ii) mit einem mit einer Gastrenneinrichtung ausgestatteten Druckrohr über eine weitere, von der Steuereinrichtung gesteuerten Ventileinrichtung (20) mit den beiden Arbeitsrohren (2,3) verbindbar ist.

2.    Gasvolumenzähler nach Anspruch 1,
**dadurch gekennzeichnet, dass**
die Messvorrichtung im Messrohr (6) angeordnet ist.

3.    Gasvolumenzähler nach Anspruch 1 oder 2,
**dadurch gekennzeichnet, dass**
die Messvorrichtung (13) zur Durchführung eines Messverfahrens geeignet ist, bei dem der Abstand zwischen einem Sensor der Messvorrichtung und der Oberfläche des Sperrfluids (5) berührungslos erfolgt.

4.    Gasvolumenzähler nach Anspruch 3 ,
**dadurch gekennzeichnet, dass**
die Messvorrichtung (13) zur Durchführung eines Ultraschall- oder Laser-Messverfahrens geeignet ist.

5.    Gasvolumenzähler nach einem der vorhergehenden Ansprüche,
**dadurch gekennzeichnet, dass**
der Querschnittsfläche des Messrohres (6) kleiner ist als die Querschnittsfläche der Arbeitsrohre (2,3).

6.    Gasvolumenzähler nach einem der vorhergehenden Ansprüche,
**dadurch gekennzeichnet, dass**
die Steuereinrichtung die Ventileinrichtungen (9 bzw. 10) und auch die weitere Ventileinrichtung (20), sofern vorhanden, gleichzeitig steuert.

7.    Gasvolumenzähler nach einem der vorhergehenden Ansprüche,
**dadurch gekennzeichnet, dass** der Gasvolumenzähler einen U-Rohr-Gaszähler (1) darstellt.

8. Gasvolumenzähler nach einem der vorhergehenden Ansprüche,
**dadurch gekennzeichnet, dass** eines, zwei, drei oder alle der folgenden Merkmalle erfüllt ist oder sind:

iidie Ventileinrichtung (9,10) stellt ein 3/2-Wege-Ventil (9,10) dar,
ii) die weitere Ventileinrichtung (20) stellt ein 3/2-Wege-Ventil dar
ii) die Arbeitsrohre (2,3) und das Messrohr (6) sind aus Glas hergestellt,
iv) die Arbeitsrohre (2,3) und das Messrohr (6) sind einstückig.

9. Verfahren zur Bestimmung eines Gasvolumens mit einem Gasvolumenzähler (1), bei welchem Verfahren

i) der Gasvolumenzähler (1) mit einem ersten, ein Sperrfluid (5) enthaltendes Arbeitsrohr (2) und einem damit fluidkommunizierend verbundenen zweiten, ebenfalls das Sperrfluid (5) enthaltenden Arbeitsrohr (3) ausgestattet ist und mit dem Gas, dessen Volumen ermittelt werden soll, kontinuierlich derart beaufschlagt wird, dass dieses Gas abwechselnd oben in das erste (2) oder oben in das zweite (3) Arbeitsrohr eingeleitet wird und das aus dem nicht beaufschlagten Arbeitsrohr (2 bzw. 3) austretende Gas aufgefangen wird,
ii) das Gas so lange in das erste Arbeitsrohr (2) geleitet wird, bis das Sperrfluid (5) einen bestimmten Füllstand erreicht hat, und das Gas anschließend in das zweite Arbeitsrohr (3) geleitet wird, bis das Sperrfluid (5) wieder einen bestimmten Füllstand erreicht hat,
iii) das Gas dann wieder in das erste Arbeitsrohr (2) geleitet wird,
iv) dieser Zyklus so häufig wie gewünscht oder erforderlich wiederholt wird,
v) die Anzahl der Zyklen bestimmt wird,
vi) aus der Anzahl der Zyklen das Gasvolumen errechnet wird, und
vii) dieser Zyklus so häufig wie gewünscht oder erforderlich wiederholt wird,
**dadurch gekennzeichnet,**
**dass** der Füllstand in einem mit den Arbeitsrohren (2,3) fluidkommunizierend verbundenen Messrohr (6), das entweder zur Atmosphäre hin offen oder mit einem Druckrohr (19), das mit einer Gastrenneinrichtung ausgestattet ist, über eine weitere Ventileinrichtung (20) mit den beiden Arbeitsrohren (2,3) verbindbar ist, bestimmt wird.

Fig. 1

Fig. 2

**Europäisches Patentamt**
**European Patent Office**
**Office européen des brevets**

## EUROPÄISCHER RECHERCHENBERICHT

Nummer der Anmeldung

EP 15 17 1514

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | FR 756 146 A (CARPENTIER M L [FR]) 5. Dezember 1933 (1933-12-05) * das ganze Dokument * ----- | 1-9 | INV. G01F3/36 |
| Y | DE 824 115 C (ANDREAS HOFER HOCHDRUCK APPBAU) 10. Dezember 1951 (1951-12-10) * Abbildungen 1, 2 * ----- | 1-9 | ADD. G01F5/00 G01F15/00 G01F15/18 G01F3/30 |
| A | GB 204 725 A (PIERRE ANDRE PAUL VICTOR MAUCL) 23. Oktober 1924 (1924-10-23) * das ganze Dokument * ----- | 1-9 | |
| A,D | US 1 554 811 A (GILMAN GEORGE H) 22. September 1925 (1925-09-22) * Abbildung 1 * ----- | 1-9 | |
| A | DE 10 2010 008511 A1 (BUNDESREP DEUTSCHLAND [DE]) 18. August 2011 (2011-08-18) * Abbildung 1 * ----- | 1-9 | |
| A | CH 114 082 A (CARBA FABRIKEN FUER KOMPRIMIER [CH]) 16. März 1926 (1926-03-16) * das ganze Dokument * ----- | 1-9 | RECHERCHIERTE SACHGEBIETE (IPC) G01F |
| A | US 2006/081045 A1 (ROBERTSON ERIC P [US]) 20. April 2006 (2006-04-20) * Abbildung 1 * ----- | 1-9 | |
| A | GB 10800 A A.D. 1908 (THOMAS WALTER [CA]) 8. Oktober 1908 (1908-10-08) * das ganze Dokument * ----- | 1-9 | |

-/--

Der vorliegende Recherchenbericht wurde für alle Patentansprüche erstellt

| Recherchenort | Abschlußdatum der Recherche | Prüfer |
|---|---|---|
| Den Haag | 10. Dezember 2015 | Nierhaus, Thomas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..................................................................
& : Mitglied der gleichen Patentfamilie, übereinstimmendes
    Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 15 17 1514

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LIU J ET AL: "A volumetric meter for monitoring of low gas flow rate from laboratory-scale biogas reactors", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, Bd. 97, Nr. 2-3, 1. Februar 2004 (2004-02-01), Seiten 369-372, XP004486641, ISSN: 0925-4005, DOI: 10.1016/J.SNB.2003.09.014 * das ganze Dokument * ----- | 1-9 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 10. Dezember 2015 | Nierhaus, Thomas |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 17 1514

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-12-2015

| Im Recherchenbericht angeführtes Patentdokument | Datum der Veröffentlichung | Mitglied(er) der Patentfamilie | Datum der Veröffentlichung |
|---|---|---|---|
| FR 756146 A | 05-12-1933 | KEINE | |
| DE 824115 C | 10-12-1951 | KEINE | |
| GB 204725 A | 23-10-1924 | KEINE | |
| US 1554811 A | 22-09-1925 | KEINE | |
| DE 102010008511 A1 | 18-08-2011 | KEINE | |
| CH 114082 A | 16-03-1926 | KEINE | |
| US 2006081045 A1 | 20-04-2006 | KEINE | |
| GB 190810800 A | 08-10-1908 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 200222589
- FR 756146 A
- US 1554811 A

### In der Beschreibung aufgeführte Nicht-Patentliteratur

- **VON JING LIU et al.** *sensors and actuators B,* 2004, vol. 97, 369-372, www.sciencedirect.com